# EUROPEAN PATENT APPLICATION

(11) **EP 1 886 608 A1**
(43) Date of publication of application: **13.02.2008**
(21) Application number: 06016414.2
(22) Date of filing: 07.08.2006
(51) Int. Cl.: A47J 43/04, A23L 1/317, B02C 18/06

(54) **Mixing device and method for mixing food material**

(71) Applicant: CFS Slagelse A/S, 4200 Slagelse (DK)
(72) Inventor: Kofoed, Niels Peter, 4340 Töllöse (DK); Ditmarsen, Jan, 2600 Glosrup (DK)
(74) Representative: Wolff, Felix

(57) **Abstract**

Device for mixing an inhomogeneous food material, comprising a vessel (2) and a mixer arrangement and method for controlling a mixing process of an inhomogeneous food material in a vessel, comprising an ultrasonic sensor (1).

## Description

The present invention relates to a device for mixing an inhomogeneous food material, comprising a vessel and a mixer arrangement and a method for controlling a mixing process of an inhomogeneous food material in a vessel.

Minced or comminuted meat, e.g. for use in hamburgers, is traditionally produced from raw materials in the form of meat and fat obtained by processing or trimming carcass cuts and the like. The raw materials are coarsely comminuted and placed in containers, one of which, for example, contains pure meat and another one fat-containing meat or possibly pure fat. The desired composition of the finished product is provided by mixing the various types of meat and fat raw material in predetermined ratios, so that the mixture will fulfil desired specifications with regard to fat or protein content. When the correct ratio of the raw materials has been introduced into a mixer, the raw materials are mixed. It is a drawback, that a determination of the mixture degree in the mixer by taking samples is unreliable by the nature of a sample. If, however, the food material is mixed too long, it is spoiled by so-called overmixing, manifesting itself as formation of fat smears and exudates, impairing the quality of the food product.

Accordingly, it is an object of the present invention to provide a device for mixing an inhomogeneous food material which avoids the disadvantages of the prior art.

The above objective is accomplished by a device for mixing an inhomogeneous food material, comprising a vessel and a mixer arrangement, wherein at least one ultrasonic sensor is arranged in or at the vessel. An ultrasonic sensor in the sense of the present invention is a sonar sensor for the detection of ultrasound, i.e. sound waves with a frequency exceeding the human auditory threshold. The ultrasonic sound sensor preferably emits ultrasound waves by a piezoelectric crystal and detects an echo of the emitted waves the same way. Alternatively, ultrasound emitter and detector can be divided into two parts, which are located vis-à-vis.

According to the invention, a controller unit for controlling the mixing process is connected to the ultrasonic sensor, the controller unit determining a mixture degree of the food material. The mixture degree, in the sense of the present invention, indicates a grade of dispersal of the raw materials over the complete mixture, which has been achieved by mixing. It is an advantage of the device according to the present invention, that the mixture degree of the food material can be determined continuously or periodically without sample taking. The food material can be mixed to the necessary mixture degree without running the risk of overmixing. Most food material mixers can be retrofitted with ultrasonic sound sensors and a controller unit according to the present invention.

Preferably, an altering influence of the food material on the ultrasonic sound is detectable by the ultrasonic sound sensor. The ultrasonic sound sensor according to the present invention can be set up to operate in several different modes: diffuse, reflex, and through-beam. The diffuse mode is the standard mode of operation. Objects, travelling into the operating range of a sound cone of the ultrasonic sound sensor, will cause an altered sensor output. In the reflex mode, a reflector located in the preset operating range is used. The operating range is preferably adjusted for the reflector. Pulses from the ultrasound sensor are bounced off the reflector and the echo pulses are returned to the sensor. When a target blocks the echo pulses, the sensor output is changed. For the through-beam mode the ultrasonic sensor consists of a transmitter, which emits ultrasonic pulses, and a receiver. If the beam between the transmitter and the receiver is interrupted the output of the receiver is changed.

The controller unit preferably analyses the development of the output signal of the ultrasonic sensor over the mixing operation. If a state of the signal, for example, matches a known signal state of a sufficiently mixed food product, the mixing operation is then stopped in order to avoid overmixing.

In a preferred embodiment, a multitude of ultrasonic sensors is arranged at the vessel, the ultrasonic sensosr all being connected to the controller unit. More preferable, the ultrasonic sensors are arranged at a bottom of the vessel. A top cover of the vessel can be advantageously used as reflector for the ultrasound waves, if the ultrasound sensor operates in the reflex mode.

In a further preferred embodiment, one or more ultrasonic emitters for emitting the ultrasonic sound are arranged at the vessel, preferably at a top cover of the vessel. This embodiment allows through-beam operating mode of the ultrasound sensors.

Another aspect of the present invention is a method for controlling a mixing process of an inhomogeneous food material in a vessel, comprising the steps of receiving an ultrasonic sound by at least one ultrasonic sound sensor and determining a mixture degree of the food material by detecting an altering influence of the food material on the ultrasonic sound. Preferably, the mixing process is stopped after a predefined mixture degree of the food material has been achieved. The inventive method for controlling the mixing process advantageously provides a sufficiently mixed food material and avoids overmixing.

These and other characteristics, features and advantages of the device for mixing and the method according to the present invention will become apparent from the following detailed description, taken in conjunction with the accompanying drawing, which illustrates, by way of example, the principles of the invention. The description is given for the sake of example only, without limiting the scope of the invention.

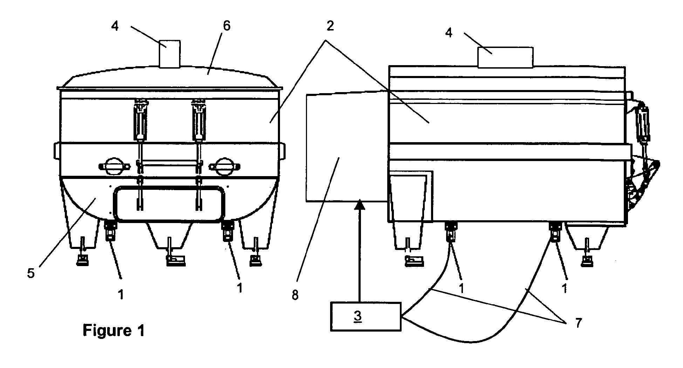

- **Figure 1**: shows two side elevations of a mixing device according to the present invention.

In **Figure 1,** two side elevations of a mixer are depicted. The mixer comprises a vessel 2 with a bottom 5 and an openable top cover 6, which is depicted in the closed position. A motor means 8 is used to move the hidden mixer arrangement, which is located inside the vessel 2. The motor means 8 is controlled by a controller unit 3. At the bottom 5 of the vessel 2, ultrasound detectors 1 are arranged, which emit ultrasound waves into the food material inside the vessel 2 and receive echoes of their emitted waves. The person skilled in the art understands that alternatively ultrasound emitters 4 can be arranged at the vessel 2, preferably vis-à-vis the ultrasound sensors 1, in this case at the top cover 5. The ultrasound emitters 4 are only necessary for a through-beam operation mode, the ultrasonic sensors 1, in that case, only receive ultrasound waves.

Output signals from the ultrasound sensors 1 are transmitted to the controller unit 3, for example by wires 7. If the controller unit 3 receives output signals from the ultrasound sensors 1, that allow for the conclusion that the food product is sufficiently mixed, the motor means 8 is turned off.

## Claims

1. Device for mixing an inhomogeneous food material, comprising a vessel (2) and a mixer arrangement, **characterized in that** at least one ultrasonic sensor (1) is arranged in or at the vessel (2), a controller unit (3) for controlling the mixing process being connected to the ultrasonic sensor (1), the controller unit (3) determining a mixture degree of the food material.

2. Device according to claim 1, **characterized in that** an altering influence of the food material on the ultrasonic sound is detectable by the ultrasonic sound sensor (1).

3. Device according to one of claims 1 or 2, **characterized in that** a multitude of ultrasonic sensors (1) is arranged at the vessel (2), preferably at a bottom (5) of the vessel.

4. Device according to one of the preceding claims, **characterized in that** one or more ultrasonic emitters (4) for emitting the ultrasonic sound are arranged at the vessel (2), preferably at a top cover (6) of the vessel.

5. Method for controlling a mixing process of an inhomogeneous food material in a vessel (2), comprising the steps of receiving an ultrasonic sound by at least one ultrasonic sound sensor (1) and determining a mixture degree of the food material by detecting an altering influence of the food material on the ultrasonic sound.

6. Method according to claim 5, **characterized in that** the mixing process is stopped after a predefined mixture degree of the food material has been achieved.
